(19) Europäisches Patentamt / European Patent Office / Office européen des brevets

(11) **EP 3 428 716 B1**

(12) **FASCICULE DE BREVET EUROPEEN**

(45) Date de publication et mention de la délivrance du brevet:
**19.08.2020 Bulletin 2020/34**

(51) Int Cl.:
***G02F 1/025*** *(2006.01)*

(21) Numéro de dépôt: **18182698.3**

(22) Date de dépôt: **10.07.2018**

(54) **MODULATEUR DE PHASE OPTIQUE À JONCTION PN SINUSOÏDALE**

OPTISCHER PHASENMODULATOR MIT SINUSOIDALEM P-N-ÜBERGANG

OPTICAL PHASE MODULATOR COMPRISING A SINUSOIDAL PN JUNCTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.07.2017 FR 1756576**

(43) Date de publication de la demande:
**16.01.2019 Bulletin 2019/03**

(73) Titulaire: **Commissariat à l'Energie Atomique et aux Energies Alternatives 75015 Paris (FR)**

(72) Inventeurs:
 • **HASSAN, Karim**
   **38054 GRENOBLE Cedex 09 (FR)**
 • **BOUTAMI, Salim**
   **38054 GRENOBLE Cedex 09 (FR)**
 • **ANFRAY, Thomas**
   **38054 GRENOBLE Cedex (FR)**

(74) Mandataire: **Hautier, Nicolas
   Cabinet Hautier
   20, rue de la Liberté
   06000 Nice (FR)**

(56) Documents cités:
   **US-A1- 2010 060 970    US-A1- 2015 293 384
   US-B1- 7 085 443**

 • **CHUNLEI SUN ET AL: "On-chip switch for reconfigurable mode-multiplexing optical network", OPTICS EXPRESS, vol. 24, no. 19, 9 septembre 2016 (2016-09-09), page 21722, XP055458316, DOI: 10.1364/OE.24.021722**
 • **XI XIAO ET AL: "High-speed silicon microring modulator based on zigzag PN junction", PHOTONICS CONFERENCE (IPC), 2012 IEEE, IEEE, 23 septembre 2012 (2012-09-23), pages 256-257, XP032269059, DOI: 10.1109/IPCON.2012.6358589 ISBN: 978-1-4577-0731-5**
 • **TERADA YOSUKE ET AL: "Si Photonic Crystal Slow-Light Modulators with Periodic p-n Junctions", JOURNAL OF LIGHTWAVE TECHNOLOGY, IEEE SERVICE CENTER, NEW YORK, NY, US, vol. 35, no. 9, 1 mai 2017 (2017-05-01), pages 1684-1692, XP011646501, ISSN: 0733-8724, DOI: 10.1109/JLT.2017.2658668 [extrait le 2017-04-19]**
 • **DAOXIN DAI ET AL: "SILICON MULTIMODE PHOTONIC INTEGRATED DE- VICES FOR ON-CHIP MODE-DIVISION-MULTIPLEXED OPTICAL INTERCONNECTS", PROGRESS IN ELECTROMAGNETICS RESEARCH, vol. 143, 1 janvier 2013 (2013-01-01), pages 773-819, XP055520768,**
 • **Graham T. Reed ET AL: "Recent breakthroughs in carrier depletion based silicon optical modulators", Nanophotonics, vol. 3, no. 4-5, 1 January 2014 (2014-01-01), XP055433174, DE ISSN: 2192-8606, DOI: 10.1515/nanoph-2013-0016**

**Description**

DOMAINE TECHNIQUE DE L'INVENTION

L'invention concerne le domaine de la photonique et de l'optoélectronique. Elle trouve au moins une application particulièrement avantageuse dans le domaine des modulateurs de signaux optiques. Elle trouvera pour application avantageuse mais non limitative la réalisation de commutateurs optiques et de modulateurs d'intensité, par exemple dans le domaine des télécommunications.

ÉTAT DE LA TECHNIQUE

Il existe plusieurs types de modulateurs pour signaux optiques, en particulier sur puce de silicium. La modulation peut être réalisée soit directement sur la source laser, soit par un composant électro-optique dédié dans le circuit. Parmi ces solutions, les modulateurs électro-optiques permettent d'obtenir une bande passante plus importante et un indice de modulation bien plus élevé que la modulation directe. Ces composants permettent notamment d'atteindre des débits supérieurs à 25 Gb/s et/ou des fréquences de modulation supérieures à 25 GHz.

Parmi ces composants, les modulateurs de phase présentent l'avantage d'accepter des puissances optiques relativement élevées, une faible dispersion chromatique et une faible dérive thermique.

Un modulateur de phase par déplétion de porteurs comprend généralement un guide d'onde optique configuré pour confiner le flux optique, et au moins une section avec une jonction PN entre une zone dopée en trous (P) et une zone dopée en électrons (N).

Le guide d'onde peut être configuré pour guider le seul mode fondamental TE00 de l'onde lumineuse. Alternativement le guide peut être configuré pour guider un ou plusieurs modes secondaires en plus du mode fondamental. Le guide est dit monomode si seul le mode fondamental peut s'y propager. On le qualifie de multimodes s'il admet au moins deux modes. Le document US 7 085 443 B1 décrit un exemple de guide monomode. Le document US 2010/060970 A1 décrit un exemple de guide multimode.

Dans les solutions connues, le guide d'onde s'étend généralement linéairement. La section comprenant la jonction PN est généralement située dans le guide d'onde et s'étend selon une direction sensiblement parallèle au guide d'onde.

Un tel modulateur de phase comprend en outre un dispositif permettant d'appliquer une tension électrique V variable entre les zones P et N.

Au niveau de la jonction PN, une zone déplétée en porteurs, appelée zone de charge d'espace (ZCE), se développe. La largeur $W_{ZCE}$ de cette zone de charge d'espace peut être modulée en appliquant une tension entre les zones P et N.

La ZCE présente notamment un indice de réfraction différent de celui du matériau semiconducteur non déplété. Cette variation d'indice de réfraction induit un déphasage de l'onde optique se propageant dans le matériau semiconducteur.

In fine, l'onde lumineuse peut donc être modulée en phase en modulant la tension entre les zones P et N.

Par exemple, le document Optical Express volume 19, issue 12, n°11507 (2011) divulgue un tel modulateur. La jonction PN se développe uniformément le long de l'axe de propagation de l'onde lumineuse dans le guide d'onde.

Un tel modulateur peut convenablement moduler le mode fondamental d'une onde lumineuse guidée. En revanche les performances d'un tel modulateur restent limitées.

Un objet de la présente invention est donc de proposer un modulateur de phase présentant une efficacité améliorée.

Les autres objets, caractéristiques et avantages de la présente invention apparaîtront à l'examen de la description suivante et des dessins d'accompagnement. Il est entendu que d'autres avantages peuvent être incorporés.

RÉSUMÉ DE L'INVENTION

Pour atteindre cet objectif, un premier aspect de l'invention concerne un modulateur de phase pour flux lumineux comprenant un guide d'entrée et au moins un guide de modulation présentant une entrée optiquement couplée à une sortie du guide d'entrée, une sortie et un axe principal (y) de propagation le long duquel une onde lumineuse est destinée à se propager, ledit guide comprenant en outre :

- au moins une zone dopée N et une zone dopée P de manière à définir une jonction PN générant une zone de charge d'espace,
- un dispositif configuré pour faire varier une tension V appliquée entre les zones dopées N et P de manière à faire varier la phase de l'onde lumineuse destinée à se propager au travers du guide de modulation.

De façon avantageuse, le guide d'entrée est configuré pour exciter différents modes de propagation au sein du guide de modulation et la jonction PN s'étend principalement le long de l'axe principal (y) de propagation et en suivant une fonction continue oscillante formant des oscillations définissant chacune un sommet et dans lequel les sommets de deux oscillations successives sont séparés d'une distance $P_{jPN}$.

L'excitation de différents modes de propagation, en particulier des modes symétriques et antisymétriques, permet d'obtenir un flux lumineux résultant d'une superposition de ces modes au sein du guide de modulation. Un tel flux lumineux présente avantageusement une distribution de puissance optique au sein du guide de modulation suivant une fonction continue oscillante formant des oscillations définissant chacune un sommet et dans lequel les sommets de deux oscillations successives sont séparés d'une distance $P_{flux}$.

Ainsi, le modulateur selon l'invention prévoit une correspondance entre la distribution du flux lumineux dans un guide multimodes et la zone de charge d'espace (ZCE) le long de l'axe principal de propagation. De cette manière, la lumière interagit avec la ZCE sur une grande longueur.

Cette disposition procure un taux de recouvrement amélioré entre la ZCE et le flux lumineux. Le déphasage obtenu par la modulation est ainsi plus important, et le modulateur est rendu particulièrement efficace.

En outre, avec les solutions de l'art antérieur enseignées par le document Optical Express volume 19, issue 12, n°11507 (2011) mentionné ci-dessus, le modulateur nécessite un guide de modulation suffisamment long pour moduler efficacement l'onde lumineuse, en particulier à basse tension. Cette grande longueur dégrade les performances en bande passante du modulateur et complexifie l'électronique d'asservissement.

Avec la solution revendiquée, le taux de recouvrement étant amélioré, la longueur du guide, selon sa direction principale, peut être réduite. Cela permet d'augmenter significativement la bande passante et donc la rapidité du modulateur. Cela permet également de simplifier l'électronique d'asservissement en utilisant un contact unique plus rapide et plus simple qu'un contact de type « traveling wave » pour lequel il faut gérer des différences de délais optiques et électriques sur plusieurs portions par exemple.

Par ailleurs, le taux de recouvrement étant amélioré, il n'est pas nécessaire de doper fortement les zones P et N, réduisant de ce fait les pertes optiques.

Par ailleurs, les solutions de l'art antérieur mentionnées ci-dessus ne sont pas bien adaptées à la modulation de phase dans un guide multimodes. La solution selon l'invention permet d'améliorer considérablement la modulation de phase dans un guide multimodes, en excitant volontairement différents modes au sein de ce guide de manière à obtenir un flux lumineux présentant une distribution de puissance optique suivant une fonction continue oscillante.

De manière préférée et particulièrement avantageuse, la fonction continue oscillante de la jonction PN est définie de manière à ce que la ZCE recouvre au moins X% de la fonction continue oscillante du flux lumineux entre l'entrée et la sortie du guide de modulation, avec $X \geq 50$, de préférence $X \geq 60$, de préférence $X \geq 70$, de préférence $X \geq 80$, de préférence $X \geq 90$.

Par ailleurs, le modulateur selon l'invention peut présenter une largeur, i.e., une dimension prise selon une direction perpendiculaire à la direction principale, qui reste limitée. Cette faible largeur contribue à réduire le temps de traversée de la jonction PN par les porteurs. Au final cela permet d'améliorer encore la rapidité du modulateur.

Pour un flux lumineux présentant une longueur d'onde $\lambda$, la superposition des différents modes de propagation implique que $P_{flux} \geq \lambda$.

Dès lors, pour obtenir un bon recouvrement X entre la fonction continue oscillante de la jonction PN et la fonction continue oscillante du flux lumineux, $P_{jPN}$ est choisie telle que $P_{jPN} \geq \lambda$.

Les contraintes dimensionnelles associées à la réalisation d'une telle jonction PN sont avantageusement relâchées et suffisamment basses, de sorte que la réalisation de la jonction PN peut s'effectuer avec les techniques classiques de lithographie. Le modulateur selon l'invention peut ainsi être obtenu de manière aisée, reproductible et peu onéreuse.

A partir d'une solution telle que celle enseignée par le document Optical Express volume 19, issue 12, n°11507 (2011) mentionné ci-dessus, l'homme du métier, serait, au mieux, incité à augmenter la largeur de la zone déplétée $W_{ZCE}$ s'étendant perpendiculairement à la direction principale de propagation de l'onde lumineuse dans un guide multimodes.

Cette solution conduit à une bande passante et une compacité relativement limitées.

De manière facultative, l'invention peut en outre présenter au moins l'une quelconque des caractéristiques suivantes :

Avantageusement, la fonction continue oscillante est périodique, de période $P_{jpN}$. De préférence, ladite fonction est sinusoïdale ou triangulaire.

Alternativement, la fonction continue oscillante est presque-périodique. De préférence, ladite fonction est obtenue par sommation en série de fonctions sinusoïdale ou triangulaire.

Alternativement, la fonction continue oscillante comprend un facteur d'amortissement sur sa période, de sorte que ladite fonction présente une pseudo-période. La pseudo-période est de préférence croissante entre l'entrée du guide de modulation et la sortie du guide de modulation.

Ces caractéristiques permettent d'adapter, alternativement ou en combinaison, la distribution spatiale de la ZCE en fonction de la nature et de la distribution de puissance du signal optique à moduler, de manière à optimiser le taux de recouvrement.

Un deuxième aspect de la présente invention concerne un commutateur comprenant au moins deux guides de sortie et un modulateur de phase selon le premier aspect de l'invention, la sortie du modulateur de phase étant optiquement couplée aux entrées des guides de sortie.

Un troisième aspect de la présente invention concerne un modulateur d'intensité comprenant au moins un modulateur de phase selon le premier aspect de l'invention et un guide de sortie. Ce modulateur de phase comprend en outre un premier segment de guidage configuré pour coupler optiquement la sortie du guide d'entrée à l'entrée du guide de modulation. Ce premier segment de guidage est en outre configuré pour coupler optiquement la sortie du guide de modulation à une entrée du guide de sortie.

Le modulateur d'intensité comprend en outre un deuxième segment de guidage s'étendant depuis la sortie du guide d'entrée du modulateur de phase jusqu'à l'entrée du guide de sortie.

Un tel modulateur d'intensité peut être de type Mach-Zehnder en particulier.

Le modulateur selon l'invention pourra avantageusement équiper un modulateur ou un commutateur dans le domaine des télécommunications.

BRÈVE DESCRIPTION DES FIGURES

Les buts, objets, ainsi que les caractéristiques et avantages de l'invention ressortiront mieux de la description détaillée de modes de réalisation de cette dernière qui sont illustrés par les dessins d'accompagnement suivants dans lesquels :

- La FIGURE 1a est une vue en perspective d'un modulateur de phase selon un mode de réalisation de la présente invention ;
- La FIGURE 1b est une vue en perspective d'un modulateur de phase selon un autre mode de réalisation de la présente invention ;
- La FIGURE 2a est une vue de dessus du modulateur de phase illustré en figure 1a et montrant une première zone de charge d'espace ;
- La FIGURE 2b est une vue de dessus du modulateur de phase illustré en figure 1a et montrant une deuxième zone de charge d'espace ;
- La FIGURE 3a est une vue de dessus du modulateur de phase illustré en figure 1a, couplé à un guide d'entrée, cette vue illustrant également une distribution du flux lumineux guidé dans le modulateur ;
- La FIGURE 3b est une vue de dessus d'un guide d'entrée issu d'un convertisseur de modes ;
- La FIGURE 4a est une vue de dessus d'un commutateur selon un mode de réalisation de la présente invention ;
- La FIGURE 4b est une vue de dessus d'un modulateur d'intensité selon un mode de réalisation de la présente invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier, les épaisseurs et dimensions des différentes couches et portions des modulateurs illustrés ne sont pas représentatives de la réalité.

DESCRIPTION DÉTAILLÉE DE L'INVENTION

Avant d'entamer une revue détaillée de modes de réalisation de l'invention, sont énoncées ci-après des caractéristiques optionnelles qui peuvent éventuellement être utilisées en association ou alternativement :

- la fonction continue oscillante est définie de manière à ce que la jonction PN recouvre au moins X% du flux lumineux entre l'entrée et la sortie du guide de modulation, avec $X \geq 50$, de préférence $X \geq 60$, de préférence $X \geq 70$, de préférence $X \geq 80$, de préférence $X \geq 90$.

  - la fonction continue oscillante forme des oscillations définissant chacune un sommet et les sommets de deux oscillations successives sont séparés d'une distance $P_{jPN}$. $P_{jPN}$ peut ainsi être qualifiée de distance pic à pic dans le cas où les sommets forment des pics.
  - la distance $P_{jPN}$ correspond à la distance la plus courte entre deux sommets successifs pris sur l'ensemble des sommets formés par la jonction PN le long du guide de modulation. De préférence, $P_{jPN}$ est telle que $P_{jPN} \geq 300nm$, de préférence $P_{jPN} \geq 750nm$, et de préférence $P_{jPN} \geq 1\mu m$. Cette distance $P_{jPN}$ peut être mesurée que la fonction soit non périodique ou soit périodique, de période constante ou non sur la longueur du guide de modulation.

- ladite fonction continue est périodique, de période $P_{jPN}$. Ainsi, selon ce mode de réalisation, la distance $P_{jPN}$ entre deux sommets successifs est égale à la période des oscillations.
- ladite fonction continue est sinusoïdale.
- ladite fonction continue est triangulaire.
- le guide d'entrée est configuré pour que le flux lumineux se propageant au sein du guide de modulation présente une distribution de puissance oscillante et cette distribution oscille de manière périodique selon une période $P_{flux}$ au sein du guide de modulation.
- la distribution de puissance du flux lumineux se propageant au travers du guide de modulation oscille de manière périodique selon une période $P_{fluxE}$ à l'entrée dudit guide et la jonction PN est configurée de manière à vérifier la formule suivante :

$$k_1 . P_{fluxE} \leq P_{jPN} \leq k_2 . P_{fluxE}$$

avec $k_1$=0,5 et $k_2$=2, de préférence $k_1$=0,7 et $k_2$=1,5, de préférence $k_1$=0,8 et $k_2$=1,2, de préférence $k_1$=0,9 et $k_2$=1,1, et de préférence $k_1$=0,95 et $k_2$=1,05.
- la période $P_{fluxS}(V)$ de la distribution de puissance du flux lumineux en sortie du guide dépend de la tension V, V variant entre $V_{min}$ et $V_{max}$ en fonctionnement, et la jonction PN est configurée de manière à vérifier la formule suivante :

$$k_3 . P_{FluxS} \leq P_{jPN} \leq k_4 . P_{FluxS}$$

avec $k_3$=0,5 et $k_4$=2, pour toute valeur de V comprise entre $V_{min}$ et $V_{max}$.
- $V_{min}$ = 0 Volts et $| V_{max} | \leq$ 8 V, de préférence $| V_{max} | \leq$ 5 V et de préférence $| V_{max} | \leq$ 2,5 V.
- le guide de modulation présente une entrée et une sortie et $P_{jPN}$ est sensiblement, de préférence rigoureusement constante le long de l'axe principal (y) de propagation entre l'entrée et la sortie du guide de modulation.
- le guide de modulation présente une entrée et une sortie et $P_{jPN}$ varie le long de l'axe principal (y) de propagation entre une période $P_{jPNE}$ à l'entrée d'une portion de modulation du guide de modulation et une période $P_{jPNS}$ à la sortie de ladite portion de modulation du guide de modulation, tel que :

$$l_1 . P_{jPNS} \leq P_{jPNE} \leq l_2 . P_{jPNS}$$

avec $l_1$=0,8 et $l_2$=1,2, de préférence $l_1$=0,9 et $l_2$=1,1, et de préférence $l_1$=0,95 et $l_2$=1,05.
- $P_{jPN} \geq$ 300nm, de préférence $P_{jPN} \geq$ 750nm, et de préférence $P_{jpN} \geq$ 1 $\mu$m.
- le guide de modulation est un guide multimodes, de préférence bi-mode.
- le modulateur comprend un guide d'entrée présentant une sortie optiquement couplée au guide de modulation.
- le guide d'entrée est configuré pour exciter différents modes de propagation au sein du guide de modulation.
- le guide d'entrée est un guide monomode présentant un axe de propagation non aligné avec l'axe principal (y) de propagation du guide de modulation.
- le guide d'entrée est une sortie d'un convertisseur de mode.
- le modulateur est configuré pour une onde lumineuse présentant une longueur d'onde $\lambda$ comprise entre 700 nm et 3000nm, et de préférence 1530 nm $\leq \lambda \leq$ 1585 nm (bande « C ») ou 1260 nm $\leq \lambda \leq$ 1360 nm (bande « O »).
- le modulateur est configuré pour une onde lumineuse présentant une longueur d'onde À, et ladite fonction continue oscillante de la jonction PN est périodique de période $P_{jPN}$ telle que $P_{jPN} \geq \lambda$.
- le guide d'entrée est un guide multimodes guidant simultanément différents modes de propagation du flux lumineux.
- le dopage de la zone P+ est inférieur à $10^{18}$ cm$^{-3}$, de préférence de l'ordre de $10^{17}$ cm$^{-3}$.
- le dopage de la zone N+ est inférieur à $2.10^{18}$ cm$^{-3}$, de préférence de l'ordre de $2.10^{17}$ cm$^{-3}$.

Pour déterminer le trajet et la position d'un flux lumineux se propageant dans le guide de modulation, on peut procéder à une simulation. Pour cela, on pourra par exemple utiliser :

- des méthodes de calcul de différences finies dans le domaine temporel (FDTD pour l'acronyme anglais Finite Différence Time Domain). Les logiciels Rsoft et Lumerical par exemple permettent de réaliser ces calculs.

- des méthodes d'éléments finis (FEM pour l'acronyme anglais Finite Elements Method). Le logiciel Comsol par exemple permet d'utiliser une telle méthode.
- des méthodes de propagation de faisceau (BPM pour l'acronyme anglais Beam Propagation Method). Le logiciel Rsoft par exemple permet d'utiliser une telle méthode

Pour mesurer le taux de recouvrement X entre la zone de charge d'espace et le flux lumineux, on procède de la manière suivante :

La zone de charge d'espace présente des distributions spatiales de concentrations de porteurs libres, électrons et trous, notées respectivement $\Delta N_e(x,y,z)$ et $\Delta N_h(x,y,z)$, où y est la direction de propagation de la lumière.

Ces distributions de concentrations de porteurs vont générer des modifications locales de l'indice de cœur $n_c$, qui dépendent du matériau et de la longueur d'onde.

Pour du silicium, autour de $\lambda=1.55~\mu m$ par exemple, on a la relation suivante :

$$\Delta n_c(x, y, z) = -8.8.10^{-22}.\Delta N_e(x, y, z) - 8.5.10^{-18}.\left(\Delta N_h(x, y, z)\right)^{0.8}$$

On peut alors exprimer le taux de recouvrement X de la ZCE par le champ électromagnétique $E(x,y,z)$ de l'onde lumineuse, en intégrant sur la section S du mode optique ou des modes optiques superposés tel que :

$$X = \frac{\iint_S |\Delta n_c(x, y, z)||E(x, y, z)|^2 dx dz}{\iint_S |\Delta n_c(x, y, z)|dx dz \, . \, \iint_S |E(x, y, z)|^2 dx dz}$$

De manière conventionnelle, c'est-à-dire au sens mathématique du terme, une fonction est une relation entre un ensemble d'entrées et un ensemble de sorties, avec la propriété que chaque entrée est liée à exactement une sortie.

En ce sens, une distribution ou un signal en créneau n'est pas une fonction.

Par ailleurs, la continuité d'une fonction est associée à la notion de continuum dont l'origine est géométrique. Les fonctions réelles définies sur un intervalle et dont le graphe peut se tracer *sans lever le crayon* sont continues.

Ainsi une fonction sinusoïdale ou une fonction en triangle est continue.

En revanche, une fonction qui présente des « sauts » est discontinue.

Notamment, une fonction de Heaviside n'est pas continue.

Dans la suite, une fonction oscillante s'entend d'une fonction alternativement croissante et décroissante. Une fonction oscillante peut-être périodique ou non périodique.

Dans la présente invention des modes de guidage d'une onde lumineuse seront indiqués. Une onde lumineuse est une onde électromagnétique comportant un champ électrique oscillant couplé à un champ magnétique oscillant. Lorsque l'onde lumineuse est confinée dans un guide d'onde ou une fibre optique par exemple, elle se propage suivant différents modes dits transverses (à cause des conditions aux limites imposées par le confinement) parmi lesquels :

- les modes TE (Transverse Electric selon l'acronyme anglais) ne présentant pas de champ électrique selon la direction de propagation. Le mode fondamental correspondant est noté TE00, les modes secondaires correspondants sont notés TE01, TE10, TE11, TE02, TE12 etc.
- les modes TM (Transverse Magnetic selon l'acronyme anglais) ne présentant pas de champ magnétique selon la direction de propagation. Le mode fondamental correspondant est noté TM00, les modes secondaires correspondants sont notés TM01, TM10, TM11, TM02, TM12 etc.

Le flux lumineux correspond ici à la distribution de puissance résultant des modes de propagation de l'onde lumineuse excités dans le guide de modulation. En particulier, la période du flux lumineux est différente de la longueur d'onde de l'onde lumineuse.

Dans la présente invention des types de dopage seront indiqués. Ces dopages sont des exemples non limitatifs. L'invention couvre tous les modes de réalisation dans lesquels les dopages sont inversés. Ainsi, si un exemple de réalisation mentionne pour une première zone un dopage P et pour une deuxième zone un dopage N, la présente description décrit alors, implicitement au moins, l'exemple inverse dans lequel la première zone présente un dopage N et la deuxième zone un dopage P.

De manière conventionnelle, un dopage noté P+ (respectivement N+) signifie qu'il s'agit d'un dopage de type P (respectivement de type N) et dont la teneur en espèce dopante est supérieure ou égale à 1 atome de l'espèce dopante pour moins de 100000 atomes du semi-conducteur. Un dopage noté P++ (respectivement N++) est un dopage de type P (respectivement de type N) dont la teneur en espèce dopante est supérieure ou égale à 1 atome de l'espèce dopante pour moins de 1000 à 10000 atomes du matériau formant la couche semi-conductrice.

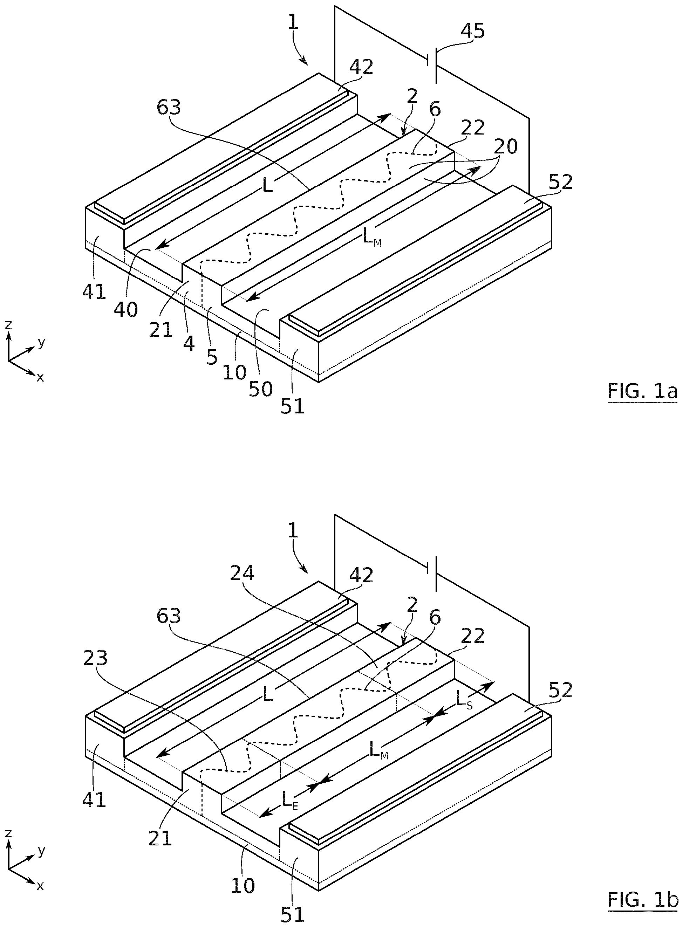

Un premier mode de réalisation d'un modulateur de phase selon l'invention va maintenant être décrit en référence aux figures 1a, 2a, 2b et 3.

Comme illustré sur la figure 1a, le modulateur 1 comprend au moins un guide de modulation 2 configuré pour guider au moins un mode optique d'une onde lumineuse, de préférence deux, et pour moduler la phase de cette onde guidée.

Sans que cela soit limitatif, le guide de modulation 2 peut être par exemple un guide en arête et présenter une dimension en largeur W selon l'axe x comprise entre 200 nm et 3 $\mu$m, une dimension en hauteur h selon l'axe z comprise entre 100 nm et 600 nm, de préférence entre 150 nm et 350 nm, et une dimension en longueur L selon l'axe principal de propagation (y) comprise entre 20 $\mu$m et 4000 $\mu$m, de préférence entre 50 $\mu$m et 500 $\mu$m.

Une hauteur h' de l'arête, formée par exemple par une gravure partielle, peut être telle que : h' = h/2 ou h' = h/5 par exemple.

Ces dimensions sont de préférence compatibles avec un guidage multimodes de l'onde lumineuse, en particulier pour h = 300 nm, h' = 150 nm, et W > 450 nm.

Le guide de modulation 2 est de préférence un guide multimodes, et de préférence un guide bi-modes.

Il est de préférence en un matériau semiconducteur présentant un contraste d'indice de réfraction avec le milieu environnant, de sorte à confiner l'onde lumineuse au sein du guide. Dans la suite, le contraste d'indice de réfraction est simplement nommé contraste d'indice.

Le guide de modulation 2 est de préférence en silicium.

Selon une possibilité, le guide 2 peut être en germanium.

Il peut être formé à partir d'au moins une étape de lithographie et d'au moins une étape de gravure par exemple, sur un substrat 10. De préférence, le substrat 10 est également en silicium.

Le guide de modulation 2 comprend une entrée 21 et une sortie 22 au travers desquelles l'onde lumineuse entre et sort.

Il peut présenter de préférence une section dite « en arête » (également désignée RIB) dans le plan (xz) du repère illustré sur les figures.

Il peut en outre présenter une ou plusieurs surfaces 20 encapsulées par de la silice par exemple.

Le guide de modulation 2 comprend au moins une portion de modulation 63 de longueur $L_M$ selon (y), ladite portion 63 comprenant une jonction PN 6.

Cette portion de modulation 63 peut s'étendre sur la totalité du guide de modulation 2 depuis l'entrée 21 jusqu'à la sortie 22, de sorte que la longueur $L_M$ de la portion de modulation est égale à la longueur L du guide de modulation.

La longueur L du guide de modulation se mesure selon la direction principale (y) entre l'entrée 21 et la sortie 22.

Alternativement, comme illustré sur la figure 1b, cette portion de modulation 63 fait suite à une portion d'entrée 23 du guide de modulation, ladite portion d'entrée 23 s'étendant depuis l'entrée 21 selon la direction principale (y), sur une distance $L_E$ inférieure ou égale à n fois la longueur L du guide de modulation 2. De préférence n est égal à 0.2, de préférence n est égal à 0.1, de préférence n est égal à 0.05, et de préférence n est égal à 0.01.

De façon similaire, une portion de sortie 24 de longueur $L_s$ ($L_s \leq$ n.L) peut également faire suite à la portion de modulation 63, ladite portion de sortie 24 s'étendant depuis la fin de la portion de modulation 63 jusqu'à la sortie 22 du guide de modulation 2.

La jonction PN 6 est de préférence une interface entre une zone 4 dopée P+ et une zone 5 dopée N+. Par exemple, le dopage de ces zones N+ et P+ 5, 4 peut se faire par implantation ionique selon une direction parallèle à l'axe (z). La jonction PN 6 peut dès lors s'étendre parallèlement à (z) selon une profondeur d, prise selon l'axe (z), de préférence comprise entre 200 nm et 500 nm.

La jonction PN 6 s'étend également en (x) et en (y) (donc dans le plan xy) selon une courbe d'une fonction continue.

De préférence, la dimension principale de la jonction PN 6 est parallèle à l'axe (y) de propagation de l'onde lumineuse.

Avantageusement, la jonction PN 6 coïncide, au moins partiellement, avec un flux lumineux 3 associé à l'onde lumineuse se propageant au sein du guide de modulation 2, de manière à interagir avec ledit flux lumineux 3.

La propagation de l'onde lumineuse au sein du guide de modulation 2 comprend au moins un mode fondamental TE00, et peut comprendre des modes secondaires.

Le guide d'entrée 210 et le guide de modulation 2 sont configurés de sorte à ce que le flux lumineux 3 se propageant au sein du guide de modulation 2 résulte d'une superposition de différents modes excités.

Les modes secondaires peuvent être excités au sein du guide de modulation 2, par exemple par l'intermédiaire d'un guide d'entrée 210 désaxé par rapport à l'axe de propagation principal (y) du guide de modulation 2, ou excités en amont du guide de modulation 2, c'est-à-dire avant que le flux lumineux 3 se propage dans le guide de modulation 2.

Les différents modes excités se propageant simultanément au sein du guide de modulation 2 comprennent de préférence des modes symétriques et antisymétriques. Par exemple, le guide d'entrée 210 et le guide de modulation 2 sont configurés de sorte à ce que deux modes se propagent simultanément dans le guide de modulation 2, l'un étant symétrique et l'autre étant antisymétrique.

Dès lors, les modes excités se propageant simultanément dans le guide de modulation 2 se superposent de sorte à former un flux lumineux 3 présentant une distribution de puissance optique oscillante au sein du guide de modulation 2.

Les oscillations successives de cette distribution de puissance sont séparées entre elles d'une distance $P_{flux}$.

En particulier, la distribution de puissance optique des modes guidés TE00 et TE01 se propageant le long de l'axe principal (y) présente des oscillations périodiques de période $P_{flux}$ le long dudit axe (y). Toutes les explications qui suivent et qui font référence aux modes guidés TE00 et TE01, s'appliquent également aux modes guidés TM00 et TM01.

La période des oscillations $P_{flux}$ est telle que :

$$P_{flux} = \lambda / (n_{eff1} - n_{eff2}) \qquad\qquad : (1)$$

où $n_{eff1}$ est l'indice effectif associé au mode fondamental et $n_{eff2}$ est l'indice effectif associé au mode secondaire, vérifiant en outre $n_{eff1} > n_{eff2}$.

Les modes de propagation fondamental et secondaire dépendent en partie de la géométrie du guide 2. Les indices effectifs associés à ces modes de propagation dépendent *in fine* de la géométrie du guide 2, et sont notamment fonction de la largeur W du guide 2.

Le tableau ci-dessous compile des résultats de modélisations par éléments finis issus du logiciel Rsoft, pour différentes largeurs W du guide de modulation 2 :

|  | W = 0,6 $\mu$m | W = 0,7 $\mu$m | W = 0,8 $\mu$m | W = 0,9 $\mu$m |
|---|---|---|---|---|
| $n_{eff1}$ | 3,061 | 3,082 | 3,098 | 3,110 |
| $n_{eff2}$ | 2,799 | 2,856 | 2,906 | 2,946 |
| $P_{flux}$ | 5 $\mu$m | 5,8 $\mu$m | 6,8 $\mu$m | 8 $\mu$m |

La jonction PN 6 est donc avantageusement définie par la courbe d'une fonction continue oscillante dans le plan (xy).

De cette manière, la zone 4 dopée P+ et la zone 5 dopée N+ sont avantageusement interdigitées au sein du guide de modulation 2.

La fonction qui définit la forme de la jonction PN peut en particulier être périodique de période $P_{jPN}$, telle que :

$$k_1.\ P_{flux} \leq P_{jPN} \leq k_2.\ P_{flux} \qquad\qquad : (2)$$

avec $k_1=0,5$ et $k_2=2$, de préférence $k_1=0,7$ et $k_2=1,5$, de préférence $k_1=0,8$ et $k_2=1,2$, de préférence $k_1=0,9$ et $k_2=1,1$, et de préférence $k_1=0,95$ et $k_2=1,05$.

Cette période $P_{jPN}$ peut être une période moyenne ou une pseudo-période sur la longueur $L_M$ de la portion de modulation 63.

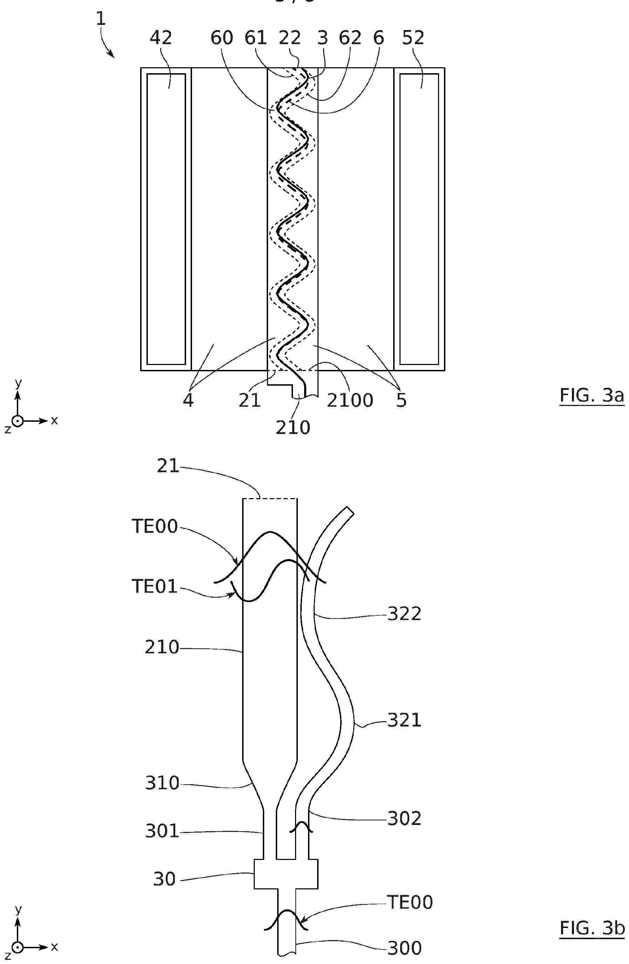

Comme illustré à la figure 3a, ladite fonction peut avantageusement être sinusoïdale, de manière à ce que la jonction PN 6 présente une bonne correspondance avec la distribution de puissance du flux lumineux 3 dans le guide de modulation 2.

Alternativement, ladite fonction peut être triangulaire.

Selon un mode de réalisation qui n'est qu'optionnel, la période $P_{jPN}$ peut être sensiblement, de préférence rigoureusement constante le long de l'axe principal (y) de propagation sur la portion de modulation 63 du guide de modulation 2.

En particulier, la période $P_{jPN}$ peut être supérieure à 300 nm, de préférence $P_{jPN} \geq 750$ nm, et de préférence $P_{jPN} \geq 1\ \mu$m.

Le modulateur 1 peut en particulier être configuré pour une onde lumineuse présentant une longueur d'onde $\lambda$ comprise entre 700 nm et 3000 nm, et de préférence 1530 nm $\leq \lambda \leq$ 1585 nm (bande « C ») ou 1260 nm $\leq \lambda \leq$ 1360 nm (bande « O »).

Dès lors, la fonction continue périodique de période $P_{jPN}$ définissant la jonction PN 6 peut être telle que $P_{jPN} \geq \lambda$.

Les contraintes dimensionnelles associées à la réalisation d'une telle jonction PN 6 de période $P_{jPN}$ sont faibles. La réalisation de cette jonction PN 6 peut donc parfaitement s'effectuer avec les techniques de lithographie optique classiques. Le modulateur 1 selon l'invention peut ainsi être obtenu de manière aisée, reproductible et peu onéreuse.

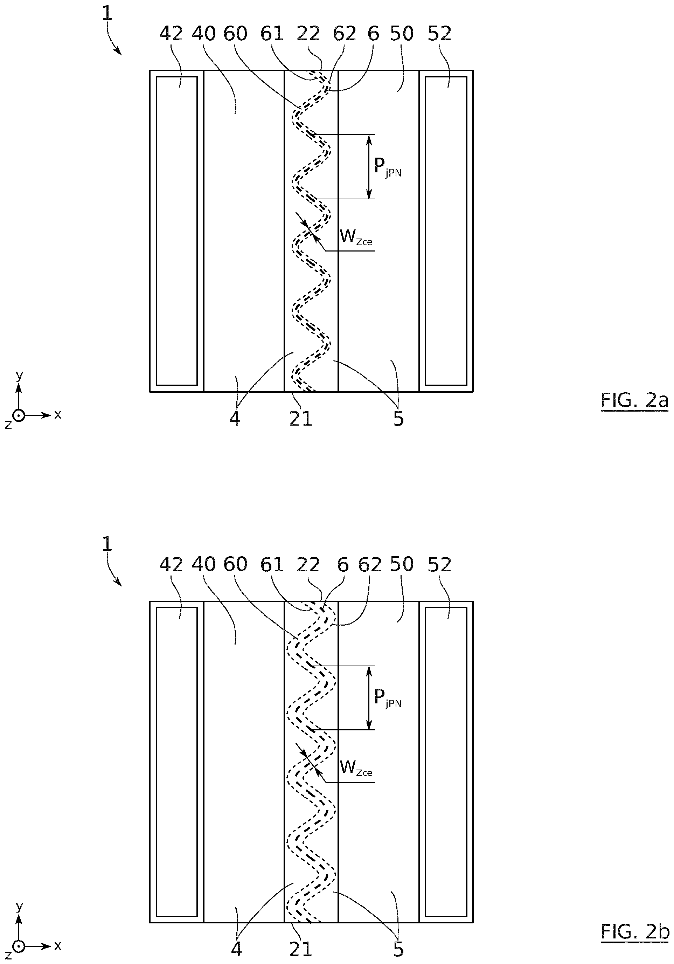

Comme illustré aux figures 2a et 2b, au niveau de la jonction PN 6, une zone de charge d'espace, notée ZCE 60 dans la suite, s'étend de part et d'autre de la jonction PN selon une direction orthogonale à la direction tangentielle à la courbe définissant la jonction PN 6.

La ZCE 60 présente une limite, également dénommé frontière 61, du côté de la zone 4 dopée P+, et une frontière 62 du côté de la zone 5 dopée N+. La ZCE 60 est délimitée par les frontières 61, 62.

La ZCE 60 présente dès lors une largeur $W_{ZCE}$, de préférence prise selon une direction orthogonale à la direction tangentielle à la courbe définissant la jonction PN 6, i.e. aux courbes formées par les frontières 61, 62. Les largeurs $W_{ZCE}$ de deux ZCE 60 différentes sont référencées en figures 2a et 2b.

Cette zone de charge d'espace est déplétée en porteurs de charge.

La déplétion modifie spatialement des distributions de concentrations de porteurs libres, électrons et trous, notées respectivement $\Delta N_e(x,y,z)$ et $\Delta N_h (x,y,z)$.

Ces distributions de concentrations de porteurs vont générer des modifications locales de l'indice de cœur $n_c$.

La variation d'indice de cœur $\Delta n_c(x,y,z)$ dépend du matériau et de la longueur d'onde À de l'onde lumineuse se propageant dans le guide 2.

Pour du silicium et pour $\lambda \approx 1.55 \ \mu$m par exemple, on a la relation suivante :

$$\Delta n_c(x, y, z) = -8.8.\,10^{-22}.\,\Delta N_e(x, y, z) - 8.5.\,10^{-18}.\left(\Delta N_h(x, y, z)\right)^{0.8}$$

La variation d'indice effectif à une position y de l'axe (y) de propagation de l'onde lumineuse peut alors se déduire par une intégration sur la section S du mode optique de propagation du flux lumineux 3 :

$$\Delta n_{eff}(z) = \frac{\iint_S \Delta n_c(x, y, z)|E(x, y, z)|^2 dx dz}{\iint_S |E(x, y, z)|^2 dx dz} \qquad : (3)$$

E(x,y,z) étant la composante électrique du champ électromagnétique de l'onde lumineuse.

Le déphasage de la lumière sur une longueur $L_M$ de propagation s'écrit alors :

$$\Delta\varphi = k_0 \int_0^{L_M} \Delta n_{eff}(y).\,dy \qquad : (4a)$$

Soit :

$$\Delta\varphi = k_0 \int_0^{L_M} \left[\frac{\iint_S \Delta n_c(x, y, z)|E(x, y, z)|^2 dx dz}{\iint_S |E(x, y, z)|^2 dx dz}\right].\,dy \qquad : (4b)$$

Si la déplétion est périodique, et que N périodes sont parcourues par l'onde lumineuse sur une longueur L, cette intégrale peut être ramenée à une période :

$$\Delta\varphi = k_0 N \int_0^P \left[\frac{\iint_S \Delta n_c(x, y, z)|E(x, y, z)|^2 dx dz}{\iint_S |E(x, y, z)|^2 dx dz}\right].\,dy \qquad : (4c)$$

Par ailleurs, on peut exprimer le taux de recouvrement X de la ZCE 60 par le flux lumineux 3 par :

$$X = \frac{\iint_S |\Delta n_c(x, y, z)||E(x, y, z)|^2 dx dz}{\iint_S |\Delta n_c(x, y, z)| dx dz \, . \, \iint_S |E(x, y, z)|^2 dx dz} \qquad : (5)$$

Le déphasage $\Delta\varphi$ - à l'origine du principe de modulation de phase du modulateur 1 - est donc notamment proportionnel au taux de recouvrement X entre le flux lumineux 3 et la ZCE 60.

Avantageusement, la ZCE 60 est configurée pour recouvrir de manière optimale les modes guidés de l'onde lumineuse, de manière à obtenir un déphasage efficace de l'onde lumineuse se propageant dans le guide de modulation 2.

La figure 3a illustre un mode de réalisation dans lequel la ZCE 60 recouvre la quasi-totalité du flux lumineux 3.

En particulier, la fonction définissant la jonction PN 6, et par extension la ZCE 60, est configurée pour présenter un taux de recouvrement X avec le flux lumineux 3 entre l'entrée 21 et la sortie 22 du guide de modulation 2, avec $X \geq 50\%$, de préférence $X \geq 60\%$, de préférence $X \geq 70\%$, de préférence $X \geq 80\%$, de préférence $X \geq 90\%$.

Cette correspondance entre la distribution de puissance du flux lumineux 3, c'est-à-dire la position du flux lumineux 3 au sein du guide de modulation 2, et celle de la ZCE 60 le long de l'axe principal de propagation rend le déphasage particulièrement efficace.

L'onde lumineuse subit un déphasage par accumulation de phase, de sorte que le flux lumineux 3 correspondant présente une période $P_{fluxE}$ en entrée 21 du guide de modulation 2, en partie au moins sur la portion d'entrée 23, et une période $P_{fluxS}$ en sortie 22 du guide de modulation 2, en partie au moins sur la portion de sortie 24.

Le déphasage peut être de préférence tel que $P_{fluxE} < P_{fluxS}$.

Pour compenser un décalage progressif du flux lumineux 3 dû au caractère cumulatif du déphasage, la fonction continue oscillante définissant la jonction PN 6 peut présenter une période $P_{jPN}$ variant le long de l'axe principal (y) de propagation entre une période $P_{jPNE}$ à l'entrée de la portion de modulation 63 et une période $P_{jPNS}$ à la sortie de la portion de modulation 63, tel que :

$$l_1 . P_{jPNS} \leq P_{jPNE} \leq l_2 . P_{jPNS} \qquad\qquad : (6)$$

avec $l_1 = 0{,}8$ et $l_2 = 1{,}2$, de préférence $l_1 = 0{,}9$ et $l_2 = 1{,}1$, et de préférence $l_1 = 0{,}95$ et $l_2 = 1{,}05$.

Le taux de recouvrement X est ainsi avantageusement augmenté.

Par ailleurs, le taux de recouvrement étant amélioré, la longueur L du guide, selon sa direction principale, peut être réduite. Cette compacité permet d'augmenter significativement la bande passante du modulateur 1 en limitant les pertes optiques sur le trajet du flux lumineux 3.

Le taux de recouvrement peut également varier en fonction de la largeur $W_{ZCE}$ de la ZCE 60.

La largeur de la ZCE 60 peut être augmentée soit par l'application d'une tension électrique V entre les zones dopées N+ et P+, soit en diminuant les concentrations de dopants $N_A$ et $N_D$, soit par combinaison de ces possibilités.

La concentration de dopants $N_A$ de la zone P+ 4 est avantageusement inférieure à $10^{18}$ cm$^{-3}$, de préférence de l'ordre de $10^{17}$ cm$^{-3}$. La concentration de dopants $N_D$ de la zone N+ 5 est avantageusement inférieure à $2.10^{18}$ cm$^{-3}$, de préférence de l'ordre de $2.10^{17}$ cm$^{-3}$.

Ces concentrations de dopants relativement faibles permettent en outre de limiter les pertes optiques, et contribuent à améliorer la bande passante du modulateur 1.

Les figures 2a et 2b illustrent un même modulateur de phase. La ZCE 60 du modulateur de phase illustrée en figure 2a présente une largeur $W_{ZCE}$ significativement inférieure à la largeur $W_{ZCE}$ de la ZCE 60 du modulateur de phase illustré en figure 2b.

Pour compenser un éventuel décentrage de la ZCE 60 par rapport à la jonction PN 6 dû par exemple à la différence de dopage effectif entre les zones P+ et N+ 4, 5, la fonction continue oscillante définissant la jonction PN 6 peut avantageusement présenter un axe principal selon (y) décentré, en projection dans le plan (xy), par rapport à l'axe longitudinal central du guide de modulation 2, et parallèle à celui-ci.

Le déphasage $\Delta\varphi$ peut également être modulé par l'application de la tension électrique V.

Avantageusement, le modulateur 1 comprend un dispositif 45 configuré pour appliquer une telle tension V variable entre les zones dopées N+ et P+ 5, 4. Cette tension varie en fonctionnement de préférence entre $V_{min}$ et $V_{max}$ avec $V_{min} = 0$ Volts et $|V_{max}| \leq 8$ V, de préférence $|V_{max}| \leq 5$ V et de préférence $|V_{max}| \leq 2{,}5$ V.

En particulier, $V_{min}$ et $V_{max}$ peuvent être adaptés en fonction de l'application par exemple, ou pour une longueur d'onde $\lambda$ ou une bande de longueurs d'onde particulière.

$V_{max}$ peut en particulier correspondre à la tension demi-onde $V_\pi$ permettant d'induire une variation de phase de $\pi$ sur l'onde lumineuse en sortie 22 du modulateur.

La période du flux lumineux 3 en sortie 22 du guide étant proportionnelle au déphasage $\Delta\varphi$, elle dépend également de la tension V et il convient de configurer la jonction PN 6 de sorte que :

$$k_3 . P_{FluxS} (\Gamma, V) \leq P_{jPN} \leq k_4 . P_{FluxS} (\Gamma, V) \qquad\qquad : (7)$$

avec $k_3 = 0{,}5$ et $k_4 = 2$, pour toute valeur de V comprise entre $V_{min}$ et $V_{max}$.

Le modulateur 1 comprend des zones de contacts 42, 52 destinées à raccorder ledit dispositif 45 aux zones N+ et P+. Du côté de la zone N+ 5, respectivement de la zone P+ 4, la zone de contact comprend au moins une couche métallique déposée sur une zone 51 dopée N++, respectivement sur une zone 41 dopée P++.

La ou les couches métalliques peuvent comprendre du cuivre, du titane, de l'aluminium, du nickel, du chrome sous forme d'élément pur ou en alliage. Au moins une couche intermédiaire (par exemple entre les zones 41, 51 et les contacts 42, 52 respectivement) peut exister pour réduire la résistance des contacts, une telle couche étant préférentiellement un alliage de Nickel-Silicium, que l'on appelle siliciuration. La siliciuration est largement connue des technologies MOS notamment.

Le dopage des zones N++ et P++ peut être supérieur à $10^{19}$ cm$^{-3}$ de manière à assurer une faible résistance d'accès et un bon transport électrique des charges vers les zones N+ et P+. La zone N++ 51, respectivement la zone P++ 41, présente une continuité avec la zone N+ 5, respectivement avec la zone P+ 4.

Avantageusement, les surfaces des zones N++ et P++, et la surface libre 20 du guide de modulation 2 peuvent être dans un même plan, de sorte à limiter les étapes du procédé de fabrication, en particulier les étapes de lithographie.

Les zones N++ et P++ peuvent donc présenter une marche vis-à-vis des portions 50, 40 respectives des zones N+ et P+ isolant le guide de modulation 2. La marche peut avantageusement présenter une hauteur h' selon l'axe z de façon similaire à la hauteur h' du guide de modulation 2.

Les zones de contact sont de préférence parallèles au guide de modulation 2, espacées dudit guide d'une distance selon l'axe (x) comprise entre 1 $\mu$m et 20 $\mu$m, de préférence entre 5 $\mu$m et 15 $\mu$m, de préférence entre 1 $\mu$m et 3 $\mu$m.

Cette distance faible contribue à réduire le temps de traversée de la jonction PN 6 par les porteurs et permet d'améliorer la rapidité du modulateur 1.

Selon une possibilité, les zones de contacts 42, 52 peuvent comprendre plusieurs portions de contact indépendantes.

Le modulateur 1 peut en outre comprendre un guide d'entrée 210 présentant une sortie 2100 optiquement couplée au guide de modulation 2.

Ce couplage peut être direct ou évanescent.

Ledit guide d'entrée 210 peut être de préférence un guide monomode présentant un axe de propagation désaxé, en projection dans le plan (xy), par rapport à l'axe principal (y) de propagation du guide de modulation 2.

Ce décentrage permet de favoriser l'apparition de plusieurs modes au sein du guide de modulation 2. En particulier le décentrage permet d'exciter les modes TE00 et TE01 ou les modes TM00 et TM01, résultant de ce fait en une oscillation du pic d'intensité lumineuse.

Alternativement, le guide d'entrée 210 peut être un guide multimodes guidant simultanément plusieurs modes excités.

Selon une possibilité avantageuse, le guide d'entrée 210 peut comprendre une sortie d'un convertisseur de mode.

La figure 3b illustre un mode de réalisation d'un guide d'entrée 210 multimodes issu d'une branche de sortie d'un convertisseur de modes.

Un tel convertisseur de modes configuré pour former un flux lumineux 3 multimodes peut relever d'une technologie de multiplexage dite par division spatiale SDM (acronyme anglais de « Spatial-Division Multiplexing »).

Par exemple, ce convertisseur peut comprendre un séparateur de puissance ou un dispositif interférentiel multimodes 30 MMI (acronyme anglais de « MultiMode Interference ») permettant de générer, par division spatiale à partir d'une onde lumineuse d'entrée monomode (par exemple TE00) se propageant dans une branche d'entrée 300 monomode, une première et une deuxième ondes lumineuses monomodes (par exemple TE00) se propageant respectivement dans une première et une deuxième branches 301, 302 monomodes.

La première branche monomode 301 peut être élargie au niveau d'une partie 310 de façon à former le guide d'entrée 210 configuré pour guider et/ou hybrider par exemple deux modes de propagation d'un flux lumineux.

La première onde lumineuse peut ainsi être transmise dans le guide d'entrée 210. Elle se propage de préférence selon un mode de propagation symétrique.

Le dimensionnement de cette partie 310 élargie est notamment fonction de l'onde lumineuse d'entrée, des modes à guider et/ou hybrider dans le guide d'entrée 210 et des indices de réfraction effectifs associés à ces modes.

La référence « Silicon multimode photonic integrated devices for on-chip mode-division-multiplexed optical interconnects, D. Dai et al., Progress In Electromagnetics Research, Vol. 143, 773-819, 2013 » détaille différents dimensionnements possibles.

La deuxième branche monomode 302 présente de préférence une partie de découplage 321 et une partie de couplage 322.

La partie de découplage 321 est configurée pour éviter un couplage réciproque indésirable entre les ondes lumineuses se propageant dans le guide d'entrée 210 et dans la deuxième branche 302, au moins à proximité immédiate de la partie 310 élargie. Cette partie de découplage 321 peut être réalisée en augmentant la distance de séparation spatiale entre le guide d'entrée 210 et la deuxième branche 302.

La partie de couplage 322 est configurée pour transférer par couplage une partie au moins de la deuxième onde lumineuse dans le guide d'entrée 210, de façon à exciter par exemple un mode de propagation antisymétrique TE01 du flux lumineux se propageant dans le guide d'entrée 210, en plus du mode symétrique TE00.

Un tel convertisseur permet par exemple de former un flux lumineux présentant une propagation bi-modes dans le guide d'entrée 210. Ce flux lumineux peut ensuite être transmis en entrée 21 du guide de modulation 2.

D'autres modes de réalisation d'un convertisseur de modes dont une branche multimodes peut être couplée en entrée 21 du guide de modulation 2 du modulateur 1 sont décrits à la référence « Silicon multimode photonic integrated devices for on-chip mode-division-multiplexed optical interconnects, D. Dai et al., Progress In Electromagnetics Research, Vol. 143, 773-819, 2013 », par exemple aux figures 25 et 27 de ce document.

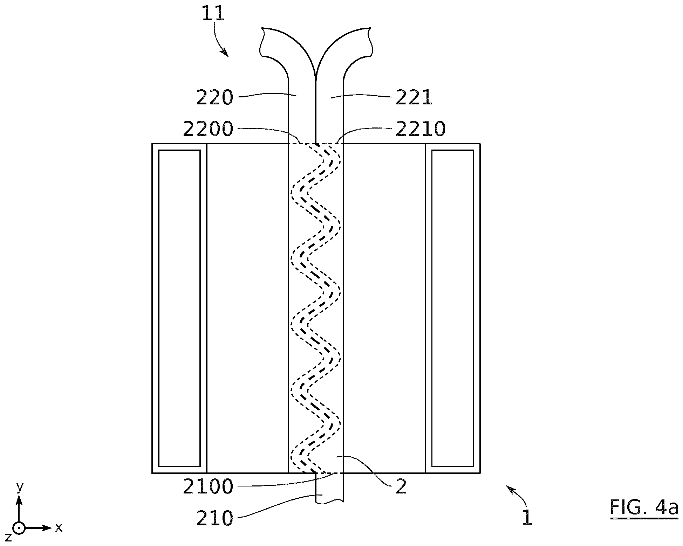

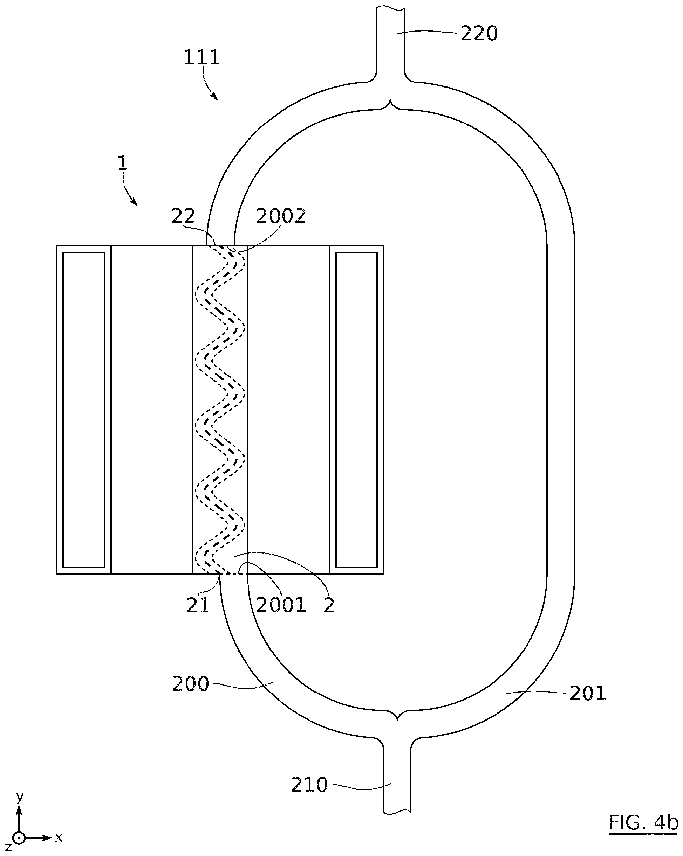

En référence aux figures 4a et 4b, deux applications particulièrement avantageuses de l'invention vont maintenant être décrites.

La figure 4a illustre un commutateur 11 comprenant au moins : un guide d'entrée 210, au moins deux guides de sortie 220, 221 et un modulateur de phase 1 selon l'invention.

L'entrée 21 du modulateur de phase 1 est de préférence optiquement couplée à une sortie 2100 du guide d'entrée et la sortie 22 du modulateur de phase 1 est de préférence optiquement couplée aux entrées 2200, 2210 des guides de sortie 220, 221.

Les guides d'entrée 210 et de sortie 220, 221 sont de préférence en silicium et peuvent présenter au moins une surface libre.

Leurs sections peuvent présenter une surface deux fois moins grande que la surface de la section du guide de modulation 2.

Le guide d'entrée 210 peut être de préférence un guide monomode. Avantageusement, il présente un axe de propagation désaxé, dans le plan (xy), par rapport à l'axe principal (y) de propagation du guide de modulation 2, de manière à favoriser l'apparition de plusieurs modes au sein du guide de modulation 2.

Les guides de sortie 220, 221 sont de préférence adjacents entre eux au niveau du couplage avec la sortie 22 du guide de modulation 2. La somme de leurs sections respectives peut avantageusement être égale à la section du guide de modulation 2.

Les guides de sortie 220, 221 peuvent être de préférence en silicium et/ou gainés de manière à les séparer optiquement.

Selon la tension V appliquée au modulateur de phase 1, le déphasage obtenu favorise l'injection d'un mode secondaire guidé au sein du guide de modulation 2 dans l'un ou l'autre des guides de sortie 220, 221. Cette disposition permet avantageusement de diriger un signal optique sur l'un ou l'autre des guides de sortie 220, 221. La commutation dépend avantageusement de la rapidité du modulateur de phase 1 décrit dans le premier mode de réalisation.

La figure 4b illustre un modulateur d'intensité 111 selon l'invention. Le modulateur d'intensité 111 comprend au moins un guide d'entrée 210, au moins un guide de sortie 220, au moins une première et une deuxième section 200, 201 de guidage, également désigné segments de guidage, s'étendant chacune depuis une sortie du guide d'entrée jusqu'à une entrée du guide de sortie. Le modulateur d'intensité 111 comprend en outre au moins un modulateur de phase 1 selon l'invention. Le modulateur de phase 1 est disposé sur au moins l'un parmi les premier et deuxième segments 200, 201 de guidage.

L'entrée 21 du modulateur de phase 1 est de préférence optiquement couplée à une sortie intermédiaire 2001 du premier segment 200 de guidage par exemple. La sortie 22 du modulateur de phase 1 est de préférence optiquement couplée à une entrée intermédiaire 2002 du premier segment 200 de guidage par exemple.

Lesdits premier et deuxième segments 200, 201 sont de préférence en silicium et peuvent être gainés, c'est-à-dire entourés de silice par exemple.

Ces segments de guidage 200, 201 peuvent être de préférence monomode.

La sortie intermédiaire 2001 du premier segment 200 de guidage présente avantageusement un axe de propagation désaxé par rapport à l'axe principal (y) de propagation du guide de modulation 2, de manière à favoriser l'apparition de plusieurs modes au sein du guide de modulation 2.

Alternativement, l'un et/ou l'autre des segments de guidage 200, 201 peuvent être multimodes.

Un signal optique entrant dans le modulateur d'intensité 111 peut se propager dans les premier et deuxième segments 200, 201 de guidage et se recombiner dans le guide de sortie 220 du modulateur d'intensité 111.

La partie du signal optique se propageant par exemple dans le premier segment 200 comprenant le modulateur de phase 1 subit un déphasage par rapport à la partie du signal se propageant par exemple dans le deuxième segment 201.

Le déphasage peut induire des interférences lors de la recombinaison des deux parties du signal au niveau du guide de sortie 220, lesdites interférences produisant une variation d'intensité du signal optique sortant du modulateur d'intensité 111.

Un tel modulateur d'intensité 111 peut être de type Mach-Zehnder en particulier.

Le modulateur d'intensité 111 dépend avantageusement de la compacité du modulateur de phase 1 décrit dans le premier mode de réalisation.

Selon un mode de réalisation, le modulateur d'intensité 111 ne comporte qu'un seul modulateur de phase 1 disposé sur l'un des premier et deuxième segments 200, 201 de guidage.

Selon un mode de réalisation alternatif, le modulateur d'intensité 111 comporte plusieurs modulateurs de phase 1. Un modulateur de phase 1 peut alors être disposé sur chacun des premier et deuxième segments 200, 201 de guidage, de sorte que le modulateur d'intensité 111 soit configuré selon une configuration dite « push-pull » par exemple.

L'invention n'est pas limitée aux modes de réalisations précédemment décrits et s'étend à tous les modes de réalisation couverts par les revendications.

REFERENCES

1. Modulateur de phase
2. Guide de modulation

    20. Surface libre
    21. Entrée du guide de modulation
    22. Sortie du guide de modulation

       210. Guide d'entrée
       2100. Sortie du guide d'entrée
       220, 221. Guides de sortie
       2200, 2210. Entrées des guides de sortie
       200, 201. Premier et deuxième segments

         2001. Sortie intermédiaire
         2002. Entrée intermédiaire

    23. Portion d'entrée du guide de modulation
    24. Portion de sortie du guide de modulation

3. Flux lumineux
4. Zone dopée P

    40. Portion de la zone dopée P
    41. Zone dopée P++
    42. Contact électrique
    45. Dispositif de tension

5. Zone dopée N

    50. Portion de la zone dopée N
    51. Zone dopée N++
    52. Contact électrique

6. Jonction PN
60. ZCE
61, 62. Frontières de la ZCE
63. Portion de modulation du guide de modulation

**Revendications**

1. Modulateur de phase (1) pour flux lumineux comprenant un guide d'entrée (210) et au moins un guide de modulation (2) multimodes présentant une entrée (21) optiquement couplée à une sortie (2100) du guide d'entrée (210), une sortie (22) et un axe principal (y) de propagation le long duquel un flux lumineux (3) est destiné à traverser le guide de modulation (2), le guide de modulation (2) comprenant en outre :

- au moins une zone dopée P (4) et une zone dopée N (5) de manière à définir une jonction PN (6) générant une zone de charge d'espace (60),
- un dispositif (45) configuré pour faire varier une tension V appliquée entre les zones dopées N et P (5, 4) de manière à faire varier la phase du flux lumineux (3) destiné à se propager dans le guide de modulation (2), **caractérisé en ce que** le guide d'entrée (210) est configuré pour exciter différents modes de propagation au sein du guide de modulation (2) et **en ce que** la jonction PN (6) s'étend principalement le long de l'axe principal (y) de propagation et en suivant une fonction continue oscillante formant des oscillations définissant chacune un sommet et dans lequel les sommets de deux oscillations successives sont séparés d'une distance $P_{jPN}$.

**2.** Modulateur de phase (1) selon la revendication précédente dans lequel la fonction continue oscillante est définie de manière à ce que la zone de charge d'espace (60) recouvre au moins X% du flux lumineux (3) entre l'entrée (21) et la sortie (22) du guide de modulation (2), avec de préférence $X \geq 50$, de préférence $X \geq 60$, de préférence $X \geq 70$, de préférence $X \geq 80$, de préférence $X \geq 90$.

**3.** Modulateur de phase (1) selon l'une quelconque des revendications précédentes dans lequel la distance $P_{jPN}$ est telle que $P_{jPN} \geq 300$nm, de préférence $P_{jPN} \geq 750$nm, et de préférence $P_{jPN} \geq 1\mu$m.

**4.** Modulateur de phase (1) selon l'une quelconque des revendications précédentes dans lequel la fonction continue est périodique, de période $P_{jPN}$.

**5.** Modulateur de phase (1) selon l'une quelconque des revendications précédentes dans lequel le guide d'entrée (21) est configuré pour que le flux lumineux (3) se propageant au sein du guide de modulation (2) multimodes présente une distribution de puissance oscillant de manière périodique selon une période $P_{flux}$, et la jonction PN (6) est configurée de manière à faire varier $P_{flux}$ entre une valeur $P_{fluxE}$ à l'entrée (21) du guide et une valeur $P_{fluxS}$ en sortie (22) du guide, ladite période $P_{fluxS}(V)$ dépendant de la tension V, V variant entre $V_{min}$ et $V_{max}$ en fonctionnement, la distance $P_{jpN}$ associée à la jonction PN (6) étant choisie de sorte que :

$$k_1. P_{fluxE} \leq P_{jPN} \leq k_2. P_{fluxE}$$

$$k_3. P_{FluxS} \leq P_{jPN} \leq k_4. P_{FluxS}$$

avec $k_1=0,5$ et $k_2=2$, de préférence $k_1=0,7$ et $k_2=1,5$, de préférence $k_1=0,8$ et $k_2=1,2$, de préférence $k_1=0,9$ et $k_2=1,1$, et de préférence $k_1=0,95$ et $k_2=1,05$, et avec $k_3=0,5$ et $k_4=2$, pour toute valeur de V comprise entre $V_{min}$ et $V_{max}$.

**6.** Modulateur de phase (1) selon l'une quelconque des revendications précédentes dans lequel le flux lumineux (3) se propage de façon bimodale au sein du guide de modulation (2) selon un mode fondamental et un mode secondaire et présente une longueur d'onde À et une distribution de puissance oscillant selon une période $P_{flux}$ telle que :

$$P_{flux} = \lambda / (n_{eff1} - n_{eff2})$$

où $n_{eff1}$ est l'indice effectif associé au mode fondamental et $n_{eff2}$ est l'indice effectif associé au mode secondaire, vérifiant en outre $n_{eff1} > n_{eff2}$.

**7.** Modulateur de phase (1) selon l'une quelconque des revendications précédentes dans lequel les différents modes de propagation excités se propageant simultanément au sein du guide de modulation (2) comprennent des modes symétriques et antisymétriques, de préférence deux modes, l'un étant symétrique et l'autre étant antisymétrique.

**8.** Modulateur de phase (1) selon l'une quelconque des revendications précédentes dans lequel la fonction continue est périodique, de période $P_{jPN}$ et dans lequel le guide de modulation (2) présente une entrée (21) et une sortie (22) et la période $P_{jPN}$ varie le long de l'axe principal (y) de propagation entre une période $P_{jPNE}$ à l'entrée (21) du guide de modulation (2) et une période $P_{jPNS}$ à la sortie (22) du guide de modulation (2), tel que :

$$I_1 . P_{jPNS} \leq P_{jPNE} \leq I_2 . P_{jPNS}$$

avec $I_1 = 0,8$ et $I_2 = 1,2$, de préférence $I_1 = 0,9$ et $I_2 = 1,1$, et de préférence $I_1 = 0,95$ et $I_2 = 1,05$.

**9.** Modulateur de phase (1) selon l'une quelconque des revendications précédentes dans lequel le modulateur est configuré pour une onde lumineuse présentant une longueur d'onde $\lambda$, tel que $P_{jpN} \geq \lambda$.

**10.** Modulateur de phase (1) selon l'une quelconque des revendications précédentes dans lequel le guide de modulation (2) est un guide bi-mode.

**11.** Modulateur de phase (1) selon l'une quelconque des revendications précédentes dans lequel le guide d'entrée (210) est un guide monomode présentant un axe de propagation non aligné avec l'axe principal (y) de propagation du guide de modulation (2).

**12.** Modulateur de phase (1) selon l'une quelconque des revendications 1 à 10 dans lequel le guide d'entrée (210) est une sortie d'un convertisseur de mode.

**13.** Modulateur de phase (1) selon l'une quelconque des revendications précédentes dans lequel ladite fonction continue oscillante est sinusoïdale ou est triangulaire.

**14.** Commutateur (11) comprenant un modulateur de phase (1) selon l'une quelconque des revendications précédentes et au moins deux guides de sortie (220, 221), la sortie (22) du guide de modulation (2) étant optiquement couplée à des entrées (2200, 2210) des guides de sortie (220, 221).

**15.** Modulateur d'intensité (111) comprenant au moins :

- un modulateur de phase (1) selon l'une quelconque des revendications 1 à 13 et un guide de sortie (220), le modulateur de phase (1) comprenant en outre un premier segment (200) de guidage configuré pour coupler optiquement la sortie (2100) du guide d'entrée (210) à l'entrée (21) du guide de modulation (2), ledit premier segment (200) de guidage étant en outre configuré pour coupler optiquement la sortie (22) du guide de modulation (2) à une entrée du guide de sortie (220),
- un deuxième segment (201) de guidage s'étendant depuis la sortie (2100) du guide d'entrée (210) jusqu'à l'entrée du guide de sortie (220).

**Patentansprüche**

**1.** Phasenmodulator (1) für einen Lichtstrom, der einen Eingangsleiter (210) und mindestens einen Multimode-Modulationsleiter (2) umfasst, welcher einen Eingang (21), der optisch mit einem Ausgang (2100) des Eingangsleiters (210) gekoppelt ist, einen Ausgang (22), und eine Hauptausbreitungsachse (y) aufweist, der entlang ein Lichtstrom (3) den Modulationsleiter (2) durchlaufen soll, wobei der Modulationsleiter (2) weiter umfasst:

- mindestens eine P-dotierte Zone (4) und eine N-dotierte Zone (5), um einen PN-Übergang (6) zu definieren, der eine Raumladungszone (60) erzeugt,
- eine Vorrichtung (45), die dafür konfiguriert ist, eine zwischen den N- und P-dotierten Zonen (5, 4) angelegte Spannung V zu variieren, um die Phase des Lichtstroms (3), der sich im Modulationsleiter (2) ausbreiten soll, zu variieren,

**dadurch gekennzeichnet, dass** der Eingangsleiter (210) dafür konfiguriert ist, unterschiedliche Ausbreitungsmoden innerhalb des Modulationsleiters (2) anzuregen, und dadurch, dass sich der PN-Übergang (6) im Wesentlichen entlang der Hauptausbreitungsachse (y) und einer kontinuierlich schwingenden Funktion folgend erstreckt, die Schwingungen bildet, welche jede eine Spitze definieren, und wobei die Spitzen von zwei aufeinanderfolgenden Schwingungen um einen Abstand $P_{jPN}$ getrennt sind.

**2.** Phasenmodulator (1) nach dem vorstehenden Anspruch, wobei die kontinuierlich schwingende Funktion so definiert ist, dass die Raumladungszone (60) zwischen dem Eingang (21) und dem Ausgang (22) des Modulationsleiters (2) mindestens X % des Lichtstroms (3) abdeckt, wobei vorzugsweise $X \geq 50$, vorzugsweise $X \geq 60$, vorzugsweise X

$\geq$ 70, vorzugsweise X $\geq$ 80, vorzugsweise X $\geq$ 90.

3. Phasenmodulator (1) nach einem der vorstehenden Ansprüche, wobei der Abstand $P_{jPN}$ derart ist, dass $P_{jPN} \geq 300$ nm, vorzugsweise $P_{jPN} \geq 750$ nm, und vorzugsweise $P_{jPN} \geq 1\ \mu m$.

4. Phasenmodulator (1) nach einem der vorstehenden Ansprüche, wobei die kontinuierliche Funktion periodisch ist, mit einer Periode $P_{jPN}$.

5. Phasenmodulator (1) nach einem der vorstehenden Ansprüche, wobei der Eingangsleiter (21) so konfiguriert ist, dass der Lichtstrom (3), der sich innerhalb des Multimode-Modulationsleiters (2) ausbreitet, eine gemäß einer Periode $P_{Strom}$ periodisch schwingende Leistungsverteilung aufweist, und der PN-Übergang (6) konfiguriert ist, um $P_{Strom}$ zwischen einem Wert $P_{StromE}$ am Eingang (21) des Leiters und einem Wert $P_{StromA}$ am Ausgang (22) des Leiters zu variieren, wobei die Periode $P_{StromA}(V)$ von der Spannung V abhängt, wobei V im Betrieb zwischen $V_{min}$ und $V_{max}$ variiert, wobei der Abstand $P_{jPN}$, der mit dem PN-Übergang (6) verknüpft ist, so ausgewählt ist, dass:

$$k_{1.}\ P_{StromE} \leq P_{jPN} \leq k_{2.}\ P_{StromE}$$

$$k_{3.}\ P_{StromA} \leq P_{jPN} \leq k_{4.}\ P_{StromA}$$

wobei, bei jedem Wert von V im Bereich zwischen $V_{min}$ und $V_{max}$, $k_1 = 0{,}5$ und $k_2 = 2$, vorzugsweise $k_1 = 0{,}7$ und $k_2 = 1{,}5$, vorzugsweise $k_1 = 0{,}8$ und $k_2 = 1{,}2$, vorzugsweise $k_1 = 0{,}9$ und $k_2 = 1{,}1$, und vorzugsweise $k_1 = 0{,}95$ und $k_2 = 1{,}05$, und wobei $k_3 = 0{,}5$ und $k_4 = 2$.

6. Phasenmodulator (1) nach einem der vorstehenden Ansprüche, wobei sich der Lichtstrom (3) innerhalb des Modulationsleiters (2) gemäß einer Grundmode und einer Nebenmode bimodal ausbreitet und eine Wellenlänge $\lambda$ und eine gemäß einer Periode $P_{Strom}$ schwingende Leistungsverteilung aufweist, derart, dass:

$$P_{Strom} = \lambda\ /\ (n_{eff1} - n_{eff2})$$

wobei $n_{eff1}$ der effektive Index ist, der mit der Grundmode verknüpft ist, und $n_{eff2}$ der effektive Index ist, der mit der Nebenmode verknüpft ist, wobei weiter gilt, dass $n_{eff1} > n_{eff2}$.

7. Phasenmodulator (1) nach einem der vorstehenden Ansprüche, wobei die unterschiedlichen angeregten Ausbreitungsmoden, die sich gleichzeitig innerhalb des Modulationsleiters (2) ausbreiten, symmetrische und antisymmetrische Moden, vorzugsweise zwei Moden umfassen, wobei die eine symmetrisch ist und die andere antisymmetrisch ist.

8. Phasenmodulator (1) nach einem der vorstehenden Ansprüche, wobei die kontinuierliche Funktion periodisch ist, mit einer Periode $P_{jPN}$, und wobei der Modulationsleiter (2) einen Eingang (21) und einen Ausgang (22) aufweist, und die Periode $P_{jPN}$ entlang der Hauptausbreitungsachse (y) zwischen einer Periode $P_{jPNE}$ am Eingang (21) des Modulationsleiters (2) und einer Periode $P_{jPNA}$ am Ausgang (22) des Modulationsleiters (2) variiert, derart, dass:

$$l_{1.}\ P_{jPNA} \leq P_{jPNE} \leq l_{2.}\ P_{jPNA}$$

wobei $l_1 = 0{,}8$ und $l_2 = 1{,}2$, vorzugsweise $l_1 = 0{,}9$ und $l_2 = 1{,}1$, und vorzugsweise $l_1 = 0{,}95$ und $l_2 = 1{,}05$.

9. Phasenmodulator (1) nach einem der vorstehenden Ansprüche, wobei der Modulator für eine Lichtwelle konfiguriert ist, die eine Wellenlänge $\lambda$ aufweist, derart, dass $P_{jPN} \geq \lambda$.

10. Phasenmodulator (1) nach einem der vorstehenden Ansprüche, wobei es sich beim Modulationsleiter (2) um einen Zwei-Moden-Leiter handelt.

11. Phasenmodulator (1) nach einem der vorstehenden Ansprüche, wobei es sich beim Eingangsleiter (210) um einen Ein-Moden-Leiter handelt, der eine Ausbreitungsachse aufweist, die nicht mit der Hauptausbreitungsachse (y) des Modulationsleiters (2) ausgerichtet ist.

**12.** Phasenmodulator (1) nach einem der Ansprüche 1 bis 10, wobei es sich beim Eingangsleiter (210) um einen Ausgang eines Modenwandlers handelt.

**13.** Phasenmodulator (1) nach einem der vorstehenden Ansprüche, wobei die kontinuierlich schwingende Funktion sinusförmig oder dreieckig ist.

**14.** Schalter (11), der einen Phasenmodulator (1) nach einem der vorstehenden Ansprüche und mindestens zwei Ausgangsleiter (220, 221) umfasst, wobei der Ausgang (22) des Modulationsleiters (2) optisch mit Eingängen (2200, 2210) der Ausgangsleiter (220, 221) gekoppelt ist.

**15.** Intensitätsmodulator (111), der mindestens umfasst:

- einen Phasenmodulator (1) nach einem der Ansprüche 1 bis 13 und einen Ausgangsleiter (220), wobei der Phasenmodulator (1) weiter ein erstes Leitungssegment (200) umfasst, das dafür konfiguriert ist, den Ausgang (2100) des Eingangsleiters (210) optisch mit dem Eingang (21) des Modulationsleiters (2) zu koppeln, wobei das erste Leitungssegment (200) weiter dafür konfiguriert ist, den Ausgang (22) des Modulationsleiters (2) optisch mit einem Eingang des Ausgangsleiters (220) zu koppeln,
- ein zweites Leitungssegment (201), das sich vom Ausgang (2100) des Eingangsleiters (210) bis zum Eingang des Ausgangsleiters (220) erstreckt.

**Claims**

**1.** Phase modulator (1) for a light flow comprising an entry guide (210) and at least one multimode modulation guide (2) having an entry (21) optically coupled to an exit (2100) of the entry guide (210), an exit (22) and a principal propagation axis (y) along which a light flow (3) is intended to pass through the modulation guide (2), the modulation guide (2) further comprising:

- at least one p-doped region (4) and a n-doped region (5) so as to define a p-n junction (6) generating a space charge region (60),
- a device (45) configured to vary a voltage V applied between the n- and p-doped regions (5, 4) so as to vary the phase of the light flow (3) intended to propagate in the modulation guide (2),

**characterised in that** the entry guide (210) is configured to excite various propagation modes in the modulation guide (2) and **in that** the p-n junction (6) mainly extends along the principal propagation axis (y) and following an oscillating continuous function forming oscillations each defining a peak and wherein the peaks of two successive oscillations are separated by a distance $P_{jPN}$.

**2.** Phase modulator (1) according to the preceding claim, wherein the oscillating continuous function is defined so that the space charge region (60) covers at least X% of the light flow (3) between the entry (21) and the exit (22) of the modulation guide (2), with preferably $X \geq 50$, preferably $X \geq 60$, preferably $X \geq 70$, preferably $X \geq 80$, preferably $X \geq 90$.

**3.** Phase modulator (1) according to any one of the preceding claims, wherein the distance $P_{jPN}$ is such that $P_{jPN} \geq$ 300 nm, preferably $P_{jPN} \geq 750$ nm, and preferably $P_{jPN} \geq 1$ $\mu$m.

**4.** Phase modulator (1) according to any one of the preceding claims, wherein the continuous function is periodic, of period $P_{jPN}$.

**5.** Phase modulator (1) according to any one of the preceding claims, wherein the entry guide (21) is configured so that the light flow (3) propagating in the multimode modulation guide (2) has a power distribution oscillating periodically according to a period $P_{flux}$, and the p-n junction (6) is configured so as to make $P_{flux}$ vary between a value $P_{fluxE}$ at the entry (21) of the guide and a value $P_{fluxS}$ at the exit (22) of the guide, said period $P_{fluxS}$ (V) being dependent on the voltage V, V varying between $V_{min}$ and $V_{max}$ in operation, the distance $P_{jpN}$ associated with the p-n junction (6) being chosen so that:

$$k_1 . P_{fluxE} \leq P_{jPN} \leq k_2 . P_{fluxE}$$

$$k_3 . P_{fluxS} \leq P_{jPN} \leq k_4 . P_{fluxS}$$

with $k_1 = 0.5$ and $K_2 = 2$, preferably $k_1 = 0.7$ and $k_2 = 1.5$, preferably $k_1 = 0.8$ and $k_2 = 1.2$, preferably $k_1 = 0.9$ and $k_2 = 1.1$, and preferably $k_1 = 0.95$ and $k_2 = 1.05$, and with $k_3 = 0.5$ and $k_4 = 2$, for any value of V between $V_{min}$ and $V_{max}$.

6.  Phase modulator (1) according to any one of the preceding claims, wherein the light flow (3) propagates bimodally in the modulation guide (2) in a fundamental mode and a secondary mode and has a wavelength $\lambda$ and an oscillating power distribution according to a period $P_{flux}$ such that:

$$P_{flux} = \leq \lambda / (n_{eff1} - n_{eff2})$$

where $n_{eff1}$ is the effective index associated with the fundamental mode and $n_{eff2}$ is the effective index associated with the secondary mode, also satisfying $n_{eff1} > n_{eff2}$.

7.  Phase modulator (1) according to any one of the preceding claims, wherein the various excited propagation modes propagating simultaneously in the modulation guide (2) comprise symmetric and antisymmetric modes, preferably two modes, one being symmetric and the other being antisymmetric.

8.  Phase modulator (1) according to any one of the preceding claims, wherein the continuous function is periodic, of period $P_{jPN}$, and wherein the modulation guide (2) has an entry (21) and an exit (22) and the period $P_{jPN}$ varies along the principal propagation axis (y) between a period $P_{jPNE}$ at the entry (21) of the modulation guide (2) and a period $P_{jPNS}$ at the exit (22) of the modulation guide (2), such that:

$$l_1 . P_{jPNS} \leq P_{jPNE} \leq l_2 . P_{jPNS}$$

with $l_1 = 0.8$ and $l_2 = 1.2$, preferably $l_1 = 0.9$ and $l_2 = 1.1$, and preferably $l_1 = 0.95$ and $l_2 = 1.05$.

9.  Phase modulator (1) according to any one of the preceding claims, wherein the modulator is configured for a light wave having a wave length $\lambda$, such that $P_{jPN} \geq \lambda$.

10. Phase modulator (1) according to any one of the preceding claims, wherein the modulation guide (2) is a dual-mode guide.

11. Phase modulator (1) according to any one of the preceding claims, wherein the entry guide (210) is a monomode guide having a propagation axis non-aligned with the principal axis (y) of the modulation guide (2).

12. Phase modulator (1) according to any one of claims 1 to 10, wherein the entry guide (210) is an exit of a mode converter.

13. Phase modulator (1) according to any one of the preceding claims, wherein said oscillating continuous function is sinusoidal or is triangular.

14. Switch (11) comprising a phase modulator (1) according to any one of the preceding claims and at least two exit guides (220, 221), the exit (22) of the modulation guide (2) being optically coupled to entries (2200, 2210) of the exit guides (220, 221).

15. Intensity modulator (111) comprising at least:

    - a phase modulator (1) according to any one of claims 1 to 13 and an exit guide (220), the phase modulator (1) further comprising a first guide segment (200) configured to optically couple the exit (2100) of the entry guide (210) to the entry (21) of the modulation guide (2), said first guide segment (200) being also configured to optically couple the exit (22) of the modulation guide (2) to an entry of the exit guide (220),

- a second guide segment (201) extending from the exit (2100) of the entry guide (210) to the entry of the exit guide (220).

FIG. 1a

FIG. 1b

FIG. 2a

FIG. 2b

FIG. 3a

FIG. 3b

FIG. 4a

FIG. 4b

## RÉFÉRENCES CITÉES DANS LA DESCRIPTION

**Documents brevets cités dans la description**

- US 7085443 B1

- US 2010060970 A1

**Littérature non-brevet citée dans la description**

- *Optical Express,* 2011, vol. 19 (11507

- **D. DAI et al.** Silicon multimode photonic integrated devices for on-chip mode-division-multiplexed optical interconnects. *Progress In Electromagnetics Research,* 2013, vol. 143, 773-819